# FASCICULE DE BREVET EUROPEEN

(11) **EP 0 814 988 B1**
(45) Date de publication et mention de la délivrance du brevet: **16.12.1998**
(21) Numéro de dépôt: 96904894.1
(22) Date de dépôt: 22.02.1996
(51) Int. Cl.: B60T 13/573

(54) **SERVOMOTEUR PNEUMATIQUE A REACTION PNEUMATIQUE**
PNEUMATISCHER VERSTÄRKER MIT LUFTGEFÜLLTEM REAKTIONSELEMENT
PNEUMATIC REACTION-TYPE PNEUMATIC SERVO

(30) Priorité: 31.03.1995 FR 9503839
(43) Date de publication de la demande: 07.01.1998
(73) Titulaire: BOSCH SISTEMAS DE FRENADO, S.L., 28037 Madrid (ES)
(72) Inventeur: SIMON BACARDIT, Juan, C/O BOSCH SYS. DE FREINAGE, F-93700 Drancy (FR)
(74) Mandataire: Bentz, Jean-Paul
(86) Numéro de dépôt international: FR9600282
(87) Numéro de publication internationale: WO9630245

(56) Documents cités:
- EP-A- 0 151 028
- DE-A- 2 038 385

## Description

La présente invention concerne un servomoteur pneumatique d'assistance, notamment utilisable pour l'assistance au freinage sur les véhicules à moteur, comprenant : une enveloppe rigide séparée de façon étanche en au moins deux chambres de travail, dont la première est reliée à une première source de pression délivrant une première pression, et dont la seconde est susceptible d'être sélectivement reliée, au moyen d'un clapet à trois voies, à la première source ou à une seconde source de pression délivrant une pression différente de la première; une cloison mobile délimitant les deux chambres de travail à l'intérieur de l'enveloppe et comportant une jupe rigide, cette cloison mobile étant susceptible d'être sollicitée par une force d'assistance résultant d'une différence de pression sélectivement établie entre les deux chambres de travail par l'actionnement du clapet à trois voies; un piston pneumatique solidaire de la jupe et renfermant le clapet à trois voies; une tige de commande également logée dans le piston et susceptible de recevoir une force d'entrée contrôlant l'actionnement du clapet à trois voies; une tige de poussée susceptible de coulisser suivant une première direction axiale par rapport à la tige de commande, et susceptible de recevoir, pour la retransmettre, une force de sortie qui est orientée suivant cette première direction axiale et se compose de la force d'entrée et de la force d'assistance; et des moyens de réaction interposés entre les tiges de commande et de poussée pour appliquer sur la tige de commande, à l'encontre de la force d'entrée, une réaction qui croît avec la force d'assistance, les moyens de réaction comprenant : un volume fixe défini, dans une zone centrale de la jupe, entre des première et seconde parois rigides dont cette jupe est dotée et qui sont repectivement tournées vers les première et seconde chambres de travail; une séparation mobile divisant le volume fixe en des première et seconde chambres de réaction respectivement délimitées en partie par les seconde et première parois rigides.

Des dispositifs de ce type, bien connus dans l'art antérieur, sont aujourd'hui appliqués sur un très grand nombre de véhicules a moteur pour assurer une assistance au freinage.

Ces dispositifs utilisent généralement, en tant que moyen de réaction essentiel, un disque de réaction formé d'un matériau élastomère, qui donne et donnera encore certainement longtemps toute satisfaction.

Un tel dispositif est par exemple illustré dans le document EP-A-0 151 028 qui décrit un servomoteur tandem, c'est-à-dire doté de deux étages d'amplification, et dont le second étage est intégré à la jupe rigide et piloté en pression par un circuit électronique, l'unique organe de réaction de ce servomoteur tandem étant néanmoins constitué par un classique disque de réaction en matériau élastomère.

Cependant, et malgré le caractère traditionnel des techniques concernées, les servomoteurs continuent de faire l'objet de recherches importantes, visant à en optimiser les caractéristiques de fonctionnement.

Au nombre de ces recherches figurent notamment des tentatives actuelles pour améliorer la définition des performances dynamiques des servomoteurs, et plus précisément pour réduire les tolérances sur celles de leurs caractéristiques de fonctionnement qui sont susceptibles de varier en fonction de la vitesse avec laquelle ils sont actionnes. La présente invention se situe dans ce contexte, et a pour but de proposer un servomoteur qui, pour une production en série, présente une plus grande reproductibilité de fonctionnement que les servomoteurs actuels.

A cette fin, le servomoteur de l'invention est essentiellement caractérisé en ce que les moyens de réaction comprennent en outre : des première et seconde communications reliant respectivement les premières chambres de travail et de réaction entre elles, et les secondes chambres de travail et de réaction entre elles, la première paroi rigide de la jupe étant conformée pour pouvoir entraîner, au moins indirectement, la tige de poussée suivant la première direction axiale, et la séparation étant conformée pour pouvoir entraîner, au moins indirectement, la tige de commande suivant une direction inverse de la première direction axiale.

En outre et selon un mode de réalisation préféré, le servomoteur de l'invention peut comprendre un ressort précontraint interposé entre la séparation et le piston pneumatique.

Enfin, la cloison mobile et la séparation mobile comprennent avantageusement une membrane souple commune a cette cloison et à cette séparation.

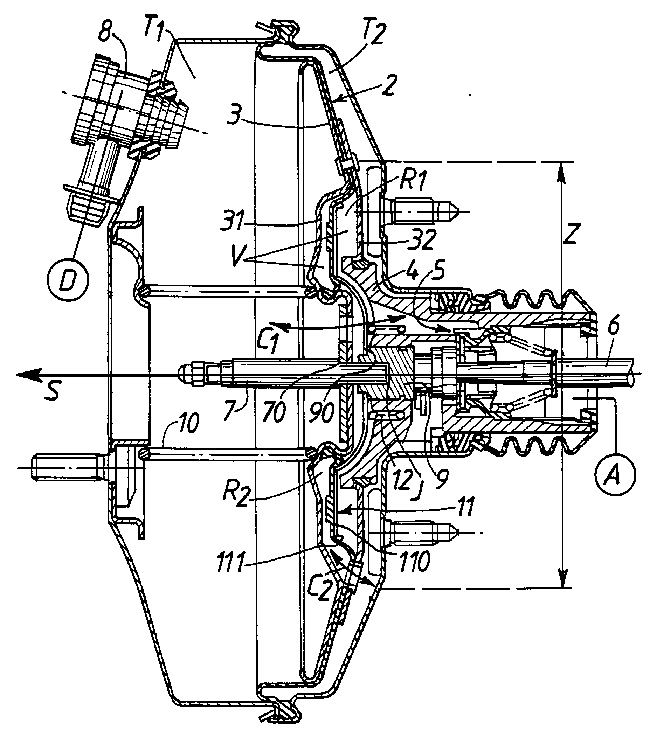

D'autres caractéristiques et avantages de l'invention ressortiront clairement de la description qui en est faite ci-après, à titre indicatif et nullement limitatif en référence à la figure unique annexée, qui est une vue en coupe d'un servomoteur conforme à l'invention.

De façon connue en soi, ce servomoteur pneumatique d'assistance comprend une enveloppe rigide 1, une cloison mobile 2 comportant une jupe rigide 3, un piston pneumatique 4, un clapet à trois voies 5, une tige de commande 6, une tige de poussée 7, et des moyens de réaction interposés entre les tiges de commande 6 et de poussée 7, et qui font plus spécifiquement l'objet de l'invention.

La cloison mobile 2 sépare de façon étanche le volume intérieur de l'enveloppe rigide 1 en deux chambres de travail T1 et T2, de volume complémentaire et variable.

La première chambre de travail T1 est reliée à une source de basse pression D par l'intermédiaire d'une valve anti-retour 8, et la seconde chambre de travail T2 est susceptible d'être sélectivement reliée, au moyen du clapet à trois voies 5, soit à la source de basse pression D, soit à une source de pression relativement haute A, par exemple l'atmosphère.

Grâce à cet agencement connu en soi, l'actionnement du clapet à trois voies 5, qui relie la seconde chambre de travail T2 à la seconde source A, provoque une différence de pression entre les deux chambres de travail T1 et T2, la cloison mobile 2 se trouvant ainsi sollicitée par une force qui représente la force d'assistance du servomoteur, et se déplaçant à l'intérieur de l'enveloppe 1 à l'encontre de la force exercée par un ressort 10, en entraînant avec elle le piston pneumatique 4, solidaire de la jupe 3.

En pratique, le clapet à trois voies 5 est porté par le piston 4 et son ouverture sur la chambre de travail T2 est commandée par l'application d'une force d'entrée suivant la direction axiale S sur la tige de commande 6, cette tige étant elle-même portée par le piston 4 et se terminant par un palpeur 9.

La tige de poussée 7 est montée de manière à pouvoir coulisser, suivant la direction axiale S, par rapport à la tige de commande 6, et est susceptible de recevoir une force de sortie également orientée suivant la direction axiale S, cette force de sortie étant retransmise à un maître-cylindre (non représenté) et se composant de la force d'entrée et de la force d'assistance.

Comme annoncé précédemment, l'invention concerne plus spécifiquement les moyens dits 〈〈de réaction〉〉 qui sont interposés entre la tige de commande 6 et la tige de poussée 7, pour appliquer sur la tige de commande, à l'encontre de la force d'entrée, une réaction qui croît avec la force d'assistance.

Selon l'invention, ces moyens de réaction comprennent : un volume fixe V défini, dans une zone centrale Z de la jupe 3, entre deux parois rigides 31, 32 de cette jupe 3; une séparation mobile 11 divisant le volume fixe V en deux chambres de réaction R1 et R2; une première communication C1 reliant entre elles les chambres de travail et de réaction T1 et R1, et une seconde communication C2 reliant entre elles les chambres de travail et de réaction T2 et R2.

Comme le montre la figure, les parois rigides 31, 32 de la jupe 3, respectivement tournées vers les chambres de travail T1 et T2 délimitent en partie, respectivement, les chambres de réaction R2 et R1, par ailleurs séparées l'une de l'autre par la séparation mobile 11.

Selon un mode de réalisation préféré, la séparation mobile 11 est constituée de la même manière que la cloison mobile 2 et comprend une jupe auxiliaire rigide 110 et une membrane souple 111, qui peut, comme représenté sur la figure, être commune à cette séparation et à la cloison mobile 2.

Ainsi, dans le cas particulier du servomoteur illustré, la communication C1 traverse la paroi rigide 31 de la jupe 3 et la jupe auxiliaire rigide 110, alors que la communication C2 traverse la paroi rigide 32 de la jupe 3 et la membrane souple 111.

La transmission de la force d'assistance est assurée par le fait que la paroi rigide 31 de la jupe 3 est conformée pour pouvoir venir en butée, suivant la direction axiale S, contre un épaulement 70 de la tige de poussée 7, et petit ainsi entraîner cette tige de poussée 7 suivant cette direction axiale S.

D'autre part, l'application de la réaction sur la tige de commande 6 est assurée par le fait que la séparation 11, et plus précisément la jupe auxiliaire rigide 110, est conformée pour pouvoir venir en butée, suivant une direction inverse de la direction axiale S, contre un épaulement 90 du palpeur 9, et peut ainsi entraîner la tige de commande 6, solidaire du palpeur 9, suivant une direction inverse de la direction axiale S.

Enfin, selon le mode de réalisation préféré de l'invention, illustré sur la figure, le servomoteur comprend en outre un ressort précontraint 12 interposé entre la séparation 11 et le piston pneumatique 4 pour définir la valeur minimale (appelée "saut") de la force d'assistance susceptible d'être produite par le servomoteur.

Le fonctionnement du servomoteur décrit est le suivant.

Dans la position de repos du servomoteur, le ressort 12, qui repousse la jupe auxiliaire 111 à distance du piston 4, donc de l'épaulement 90 du palpeur 9, laisse apparaître, entre cette jupe auxiliaire et cet épaulement, un jeu qui tend à se réduire dès qu'une force d'entrée est appliquée sur la tige de commande 6.

D'autre part, les chambres de travail T1 et T2, qui restent en communication l'une avec l'autre à travers le clapet 5 aussi longtemps que le servomoteur est en position de repos, se trouvent isolées l'une de l'autre dès le début de l'application de la force d'entrée, après quoi le clapet 5 relie la chambre de travail arrière T2 à l'atmosphère A, de façon connue en soi.

Cependant, selon l'invention, l'air atmosphérique également admis progressivement dans la chambre de réaction R2 à travers la communication C2 repousse la séparation 11 dans une direction inverse de la direction axiale S, jusqu'à ce que le jeu entre la jupe auxiliaire 111 et l'épaulement 90 du palpeur 9 soit comblé, le servomoteur adoptant alors la position représentée sur la figure.

Au delà de cette position, la cloison mobile 2, sollicitée par la différence de pression créée entre les chambres de travail T1 et T2, se déplace dans la direction S en comprimant le ressort 10 et en appliquant à la tige de poussée 7 une force proportionnelle à la force d'entrée appliquée sur la tige de commande 6, la proportionnalité étant assurée par la réaction transmise par la séparation 11 à la tige de poussée 6 par l'intermédiaire du palpeur 9.

Ce mode de fonctionnement se poursuit jusqu'à ce que la pression dans les chambres T2 et R2 avoisine la pression atmosphérique, et que le jeu J existant jusque là entre le palpeur 9 et la tige de poussée 7 soit comblé (régime de saturation), tout accroissement ultérieur de la force d'entrée étant ensuite directement transmis à la tige de poussée 7 par l'appui direct du palpeur 9 sur cette tige 7.

## Revendications

1. Servomoteur pneumatique d'assistance comprenant : une enveloppe rigide (1) séparée de façon étanche en au moins deux-chambres de travail (T1, T2), dont la première (T1) est reliée à une première source de pression (D) délivrant une première pression, et dont la seconde (T2) est susceptible d'être sélectivement reliée, au moyen d'un clapet à trois voies (5), à la première source (D) ou à une seconde source de pression (A) délivrant une pression différente de la première; une cloison mobile (2) délimitant les deux chambres de travail à l'intérieur de l'enveloppe et comportant une jupe rigide (3), cette cloison mobile étant susceptible d'être sollicitée par une force d'assistance résultant d'une différence de pression sélectivement établie entre les deux chambres de travail par l'actionnement du clapet à trois voies; un piston pneumatique (4) solidaire de la jupe (3) et renfermant le clapet à trois voies (5); une tige de commande (6) également logée dans le piston et susceptible de recevoir une force d'entrée contrôlant l'actionnement du clapet à trois voies; une tige de poussée (7) susceptible de coulisser suivant une première direction axiale (S) par rapport à la tige de commande, et susceptible de recevoir, pour la retransmettre, une force de sortie qui est orientée suivant la première direction axiale (S) et se compose de la force d'entrée et de la force d'assistance; et des moyens de réaction interposés entre les tiges de commande (6) et de poussée (7) pour appliquer sur la tige de commande, à l'encontre de la force d'entrée, une réaction quai croît avec la force d'assistance, les moyens de réaction comprenant : un volume fixe (V) défini, dans une zone centrale (Z) de la jupe, entre des première et seconde parois rigides (31, 32) dont cette jupe est dotée et qui sont repectivement tournées vers les première et seconde chambres de travail (T1, T2); une séparation mobile (11) divisant le volume fixe (V) en des première et seconde chambres de réaction (R1, R2) respectivement délimitées en partie par les seconde et première parois rigides (32, 31); caractérisé en ce que les moyens de réaction comprennent en outre : des première et seconde communications (C1, C2) reliant respectivement les premières chambres de travail (T1) et de réaction (R1) entre elles, et les secondes chambres de travail (T2) et de réaction (R2) entre elles, la première paroi rigide (31) de la jupe (3) étant conformée pour pouvoir entraîner, au moins indirectement, la tige de poussée (7) suivant la première direction axiale (S), et la séparation (11) étant conformée pour pouvoir entraîner, au moins indirectement, la tige de commande (6) suivant une direction inverse de la première direction axiale.

2. Servomoteur suivant la revendication 1, caractérisé en ce qu'il comprend en outre un ressort précontraint (12) interposé entre la séparation (11) et le piston pneumatique (4).

3. Servomoteur suivant l'une quelconque des revendications 1 et 2, caractérisé en ce que la cloison mobile (2) et la séparation mobile (11) comprennent une membrane souple (111) commune à cette cloison et à cette séparation.

## Claims

1. Pneumatic booster comprising: a rigid casing (1) divided in leaktight fashion into at least two working chambers (T1, T2), the first (T1) of which is connected to a first pressure source (D) delivering a first pressure, and the second (T2) of which can be connected selectively, by means of a three-way valve (5), to the first source (D) or to a second pressure source (A) delivering a pressure different from the first; a moving partition (2) delimiting the two working chambers inside the casing and including a rigid skirt (3), it being possible for this moving partition to be urged by a boost force resulting from a difference in pressure set up selectively between the two working chambers by actuation of the three-way valve; a pneumatic piston (4) integral with the skirt (3) and containing the three-way valve (5); an operating rod (6) also accommodated in the piston and able to receive an input force controlling the actuation of the three-way valve; a push rod (7) able to slide in a first axial direction (S) with respect to the operating rod and able to receive, in order to transmit it on, an output force which is orientated in the first axial direction (S) and is composed of the input force and of the boost force; and reaction means interposed between the operating rod (6) and the push rod (7) in order to apply to the operating rod, counter to the input force, a reaction which increases with the boost force, the reaction means comprising: a fixed volume (V) defined, in a central region (Z) of the skirt, between first and second rigid walls (31, 32) with which this skirt is equipped and which point respectively towards the first and second working chambers (T1, T2); a moving divider (11) dividing the fixed volume (V) into first and second reaction chambers (R1, R2) respectively delimited in part by the second and first rigid walls (32, 31); characterized in that the reaction means comprise furthermore: first and second communications (C1, C2) respectively connecting the first working chamber (T1) and first reaction chamber (R1) together, and connecting the second working chamber (T2) and second reaction chamber (R2) together, the first rigid wall (31) of the skirt (3) being shaped so that it can, at least indirectly, carry the push rod (7) along in the first axial direction (S), and the divider (11) being shaped so that it can, at least indirectly, carry the operating rod (6) along in a direction which is the opposite direction to the first axial direction.

2. Booster according to Claim 1, characterized in that it further comprises a prestressed spring (12) interposed between the divider (11) and the pneumatic piston (4).

3. Booster according to either one of Claims 1 and 2, characterized in that the moving partition (2) and the moving divider (11) comprise a flexible diaphragm (111) common to this partition and to this divider.

## Patentansprüche

1. Pneumatischer Unterstützungs-Servomotor mit: einem starren Gehäuse (1), das auf dichte Weise in mindestens zwei Arbeitskammern (T1, T2) unterteilt ist, wovon die erste (T1) an eine erste Druckquelle (D) angeschlossen ist, die einen ersten Druck abgibt, und die zweite (T2) wahlweise mittels eines Dreiwegeventils (5) an die erste Druckquelle (D) oder an eine zweite Druckquelle (A) angeschlossen werden kann, die einen vom ersten unterschiedlichen Druck abgeben kann; einer beweglichen Trennwand (2), die die beiden Arbeitskammern im Inneren des Gehäuses abteilt und eine starre Schürze (3) umfaßt, wobei die bewegliche Trennwand von einer Hilfskraft beaufschlagt werden kann, die sich aus einem Druckunterschied ergibt, der sich wahlweise durch die Betätigung des Dreiwegeventils zwischen den beiden Arbeitskammern aufbaut; einem pneumatischen Kolben (4), der mit der Schürze (3) fest verbunden ist und das Dreiwegeventil (5) einschließt; einer Steuerstange (6), die ebenfalls im Kolben untergebracht ist und eine Eingangskraft aufnehmen kann, die die Betätigung des Dreiwegeventils steuert; einer Schubstange (7), die in Bezug auf die Steuerstange entlang einer ersten axialen Richtung (S) gleiten kann und, um sie zurückzuleiten, eine Ausgangskraft aufnehmen kann, die entlang der ersten axialen Richtung (S) ausgerichtet ist und sich aus der Eingangskraft und der Hilfskraft zusammensetzt; und Reaktionsmitteln, die zwischen der Steuerstange (6) und der Schubstange (7) untergebracht sind, um auf die Steuerstange entgegen der Eingangskraft eine Reaktion auszuüben, die mit der Hilfskraft zunimmt, wobei die Reaktionsmittel umfassen: ein festes Volumen (V), das in einer zentralen Zone (Z) der Schürze zwischen einer ersten und einer zweiten starren Wand (31, 32) gebildet ist, mit denen die Schürze versehen ist und die jeweils zur ersten bzw. zweiten Arbeitskammer (T1, T2) gerichtet sind; eine bewegliche Abtrennung (11), die das feste Volumen (V) in eine erste und eine zweite Reaktionskammer (R1, R2) aufteilt, die jeweils teilweise von der ersten und der zweiten starren Wand (32, 31) begrenzt sind, dadurch gekennzeichnet, daß die Reaktionsmittel weiter umfassen: eine erste und eine zweite Verbindung (C1, C2), die jeweils die erste Arbeitskammer (T1) und die erste Reaktionskammer (R1) bzw. die zweite Arbeitskammer (T2) und die zweite Reaktionskammer (R2) miteinander verbinden, wobei die erste starre Trennwand (31) der Schürze (3) so ausgebildet ist, daß sie, zumindest indirekt, die Schubstange (7) entlang der ersten axialen Richtung (S) mitnehmen kann, und die Abtrennung (11) so ausgebildet ist, daß sie, zumindest indirekt, die Steuerstange (6) in einer Richtung entgegen der ersten axialen Richtung mitnehmen kann.

2. Servomotor nach Anspruch 1, dadurch gekennzeichnet, daß er außerdem eine vorgespannte Feder (12) umfaßt, die zwischen der Abtrennung (11) und dem pneumatischen Kolben (4) untergebracht ist.

3. Servomotor nach einem der Ansprüche 1 und 2, dadurch gekennzeichnet, daß die bewegliche Trennwand (2) und die bewegliche Abtrennung (11) eine nachgiebige Membran (111) umfassen, die der Trennwand und der Abtrennung gemeinsam ist.
